# EUROPEAN PATENT SPECIFICATION

(11) **EP 4 356 240 B1**
(45) Date of publication and mention of the grant of the patent: **07.05.2025**
(21) Application number: 21773800.4
(22) Date of filing: 10.09.2021
(51) Int. Cl.: G06F 8/65

(54) **METHOD FOR UPDATING A COMPUTING DEVICE, A COMPUTING DEVICE AND A VEHICLE WITH A COMPUTING DEVICE**
VERFAHREN ZUM AKTUALISIEREN EINER RECHENEINRICHTUNG, RECHENEINRICHTUNG UND FAHRZEUG MIT EINER RECHENEINRICHTUNG
PROCÉDÉ DE MISE À JOUR D'UN DISPOSITIF INFORMATIQUE, DISPOSITIF INFORMATIQUE ET VÉHICULE ÉQUIPÉ D'UN DISPOSITIF INFORMATIQUE

(43) Date of publication of application: 24.04.2024
(73) Proprietor: CARIAD SE, 38440 Wolfsburg (DE)
(72) Inventor: LEYENDECKER, Tobias, 92318 Neumarkt (DE); HARRIES, Matthias, 91242 Ottensoos (DE)
(74) Representative: Hofstetter, Schurack & Partner
(86) International application number: PCT/EP2021/074927
(87) International publication number: WO 2023/036433

(56) References cited:
- US-A1- 2020 379 744
- US-B1- 7 620 392

## Description

The invention is concerned with a method for updating a computing device, a computing device and a vehicle with such a computing device.

Update processes are often divided into several phases. A preparation phase of an update during normal operation of a system in the background and activation of a prepared update to a convenient time, e.g. updating a computing device of a vehicle when the vehicle is parked.

If an operating environment, e.g. firmware, framework, operating systems, changes, applications usually have to be updated as well. In addition, applications are dependent on their individual data models. Currently, changes in applications that require changes to their individual data models must be made together with updates to the operating environment.

In a current operating environment update strategy approach, an update package is provided, wherein an operating environment update, the application updates and the data for the applications are combined. The disadvantages of that update strategy are that the update package becomes very large, the time required for download and installation is high, and in consequence, a higher energy demand of the computing device to be updated is caused.

In US 10 268 472 B2 methods, systems, and computer-readable storage media are disclosed. The method comprises executing, by a target system deploy tool, a first portion of a target-side maintenance procedure on the target system, halting execution of the first portion of the target-side maintenance procedure, executing, by a source system deploy tool, a source-side maintenance procedure on the source system, wherein, during execution of the source-side maintenance procedure, table structure change events are recorded in a source-side orchestration table, reading, by a replicator, the table structure change events recorded in the source-side orchestration table, writing, by the replicator, the table structure change events to a target-side orchestration table, and executing, by the target system deploy tool, a second portion of the target-side maintenance procedure on the target system, at least in part, by performing the table structure change events of the target-side orchestration table on one or more tables of the target system.

In WO 2018/006082 A2 a system to use submaps to control operation of a vehicle is disclosed. A storage system may be provided with a vehicle to store a collection of submaps that represent a geographic area where the vehicle may be driven. A programmatic interface may be provided to receive submaps and submap updates independently of other submaps.

In US 7 620 392 B1 a method and system for distributing and updating software in wireless devices are disclosed. The method includes receiving an update package from a wireless service provider that includes information indicating that multiple languages versions of an update are included in the update package. Based on the information, the method further specifies an update associated with a language from the update package, and transmits the update associated with the language to a wireless device.

In US 2020/0379744 A1 a system and method for management of updates across a plurality of enterprise computing devices are disclosed. The system is configured to receive telemetry about the enterprise computing devices that will be used to develop a rollout strategy for upcoming updates. The system provides IT administrators with a user interface for modifying and customizing the rollout strategy.

It is an objective of the present invention to provide a method and a computing device with an improved operation environment update strategy.

The objective is accomplished by the subject-matter of the independent claims. Advantageous developments with convenient and non-trivial further developments of the invention are specified in the following description, the dependent claims and the figures.

The invention is based on the idea of separating the application data update from the operating environment and application updates due to principally different update cycles and the usage of different update strategies. Applications can be updated as part of an update of the operating environment, so there is a consistent update of the operating environment and the applications that depend on it. This makes application data updates a decoupled process.

A first aspect of the invention relates to a method for updating a computing device, comprising the steps of receiving an update package from an update-medium, wherein the update package comprises an operating environment update, at least one application update and metadata, wherein the metadata are providing version information for data of the application to be updated, wherein the operation environment comprises firmware, framework software and/or operating systems, providing the metadata to the application by an updater of the computing device, and determining, by the at least one application, required data for the application to be updated depending on the metadata, wherein the metadata provides a link between an application version and the corresponding version information of the data required. Furthermore, the method comprises retrieving the required data in a separate update package from a remote application data storage by the at least one application and amending a data memory of the application with the retrieved required data, and updating the computing device by the updater with the operating environment update and the at least one application with the application update.

In other words, an update package for updating an operating environment for a computing device comprises the operating environment update and the updates for the applications. The data or data models that are needed for the updated applications are decoupled from this update package and only metadata providing information of needed data for the respective application are attached to the update. This update package may be received from an update-medium that may be configured as an remote computing device, especially an update server, wherein the update package is preferably received via the internet, and/or a computer-readable storage device, in particular an USB flash drive.

After receiving the update package, an updater of the computing device forwards the metadata to the respective applications, wherein the updater respectively the software updater or update manager is configured to manage the update of the computing device. By the forwarded metadata, the application may determine an update strategy to retrieve the required data for the updated application. That is, the metadata provides a link between an application version and the corresponding version information of the data required.

In particular, the application itself may determine what data are needed and when these data have to be retrieved to provide a smooth operation of the updated application. For example, the application may determine that some functions of the application are not in use, so data for these functions are deselected for the update process, and only the data for the used functions are selected to be updated. Preferably, the application may check independently if there is a possibility for a delta update where only the data or code that has changed may be updated and not the whole data model with all possible functions.

The data required for the updated application are then received in a separate update package, especially from a remote application data storage, wherein a data memory of the respective application may be adapted with the retrieved data. For example, the data in the data memory may be extended, replaced, updated and/or modified by the retrieved data. The data memory of the application may be an allocated memory on the computing device accessible by the respective applications. Preferably, the previously used data and the new data retrieved with the separate update package are stored as separate versions, so that after updating the operating environment and applications, the data versions can be switched seamlessly.

Finally, in parallel with or after the preceding step, the computing device may be updated by the updater with the operating environment update and the at least one application with the application update, wherein the updated application may access the retrieved data.

The computing device may be an electronic equipment controlled by a CPU, including a smartphone, tablet, smart watch, smart speaker, electronic control unit (ECU), desktop computer, laptop computer and/or vehicle computer.

The invention offers the advantage that the update of data for the applications can be prepared decoupled from the updates of the operating environment and the application. Therefore, applications can perform optimizations independently when preparing to update the data. When the updated environment/application is activated, consistent application data is then also available, thus, downtimes of functions can be minimized. In particular, an amount of data to be updated may be reduced by this update strategy, and the update processes of the computing device is improved.

According to the invention, a memory of the computing device comprises two partitions, wherein a first partition executing the operating environment and the application during the update, while a second partition is updated by the update package, wherein after the update package is installed, an operation state of the first and second partition is switched so that the second partition executes the updated operating environment and the updated application. In other words, the computing device is designed with two fully duplicated memory banks, respectively partitions, that are operating in a switching strategy. That is, a first partition may execute the operating environment and the application while a second partition is updated. After finishing the update, the second partition can be switched to be the active partition. Preferably, each partition has its own boot system. The respective partition may be a separate storage device or a separate memory bank within one storage device. The advantage is, that a shorter downtime may be achieved during the update of the computing device.

Moreover, the data memory of the application is separated from the two partitions and wherein the data memory is accessible from both partitions by the at least one application, wherein the application of the first partition accesses a current version of the data, while the retrieved data for the application to be updated is saved as a new version in the data memory, wherein by switching the operation state the application of the second partition is configured to access the new version of the data. In other words, the data memory of the application is independently accessible from both partitions so that an individual update strategy for updating the data can be provided. After receiving the new version of data, the current version may be superseded by the new version. That provides the advantage that a parallel update/retrieving of the required data can be performed. For example, the active first partition can still access the data memory and the current version of the data, while the application running on the first partition already started to download the required data for the new version. The data having the new version are stored separately from the partitions, which provides the advantage that after switching the partitions the new version data are still accessible for both partitions, particularly for the then active partition. Hereby, a seamless operability of the applications and the operating environment is provided.

The invention also comprises embodiments that provide features, which afford additional technical advantages.

In one embodiment, the required data are a subset of all available data of the application to be updated. That is, the application determines a subset of all available data that are required for an operation of the updated application. For example, the application may determine that only specific functions of the updated application are in use and the corresponding data are then selected as required data. This embodiment provides the advantage that an amount of the required data is reduced or is less than the whole set of data of the application, and therefore also a time required to adapt the data memory can be reduced.

In another embodiment, the required data are retrieved and installed in parallel and/or independently from updating the computing device with the operating environment update and the at least one application with the application update. This provides the advantage that updating of application data can be done in preparation, but decoupled from operating environment and application updates. Applications can perform optimizations when preparing to update data. Update strategies can be optimized independently. Then, the updated environment and application are activated, consistent application data are then also available and thus minimizing downtimes of functions.

In another embodiment, the required data of the application to be updated are further determined by an operating parameter of the computing device. In other words, the application to be updated determines an operating parameter or an environmental parameter of the computing device and/or the application, wherein the required data are specified in dependence of the operating parameter. The operating parameter may comprise specifications of the computing device, which indicate required data of all available data for the application. For example, the operating parameter may comprise country settings, language settings, a geographical position of the computing device, a bandwidth setting and/or others. This embodiment provides the advantage of better identifying a subset of all available data that is required for the updated application.

Preferably, the operating parameter is a system language and/or a geographical position of the computing device. That is, a system language indicates preferred languages for the application so that matching data for the application to be updated can be determined. Therefore, not all data packages for each language are needed for updating the data. Alternatively or additionally, a geographical position of the computing device is used as the operating parameter. The geographical position may be a country setting for the computing device and/or a position determined by a positioning sensor, e.g. GPS. By the geographical position country or location specific data may be identified from all available data of the application to be updated. For example, only maps of a predefined area around the geographical position are determined as required data to limit the amount of data that needs to be amended in the update process. Thus, an amount of required data can be limited.

Particularly preferred, the at least one application is configured as a voice assistant and the required data comprise a language package of the voice assistant selected according to the operating parameter and the metadata. In other words, the computing device is able to execute a voice assistant, wherein the update of the voice assistant also requires the voice packages to be updated. The operating parameter, in particular the system language and/or the geographical position, indicates the language packages suitable for the updated voice assistant. For example, the operating parameter identifies an English and/or German system language, and the metadata provides the version information or the new data files. Thus, the application may retrieve the new version of an English and/or German language package for the updated voice assistant. By that, there is no need to download other language packages, and the size of the required data can be limited to only the essential data indicated by the operating parameter.

In another advantageous embodiment, the at least on application is configured as a navigation program and the required data comprise a map package of the navigation program selected according to the operating parameter and the metadata. That is, the computing device may execute a navigation program, wherein after an update of the navigation program new map packages are needed for a proper operation of the navigation program. The required map package may be determined according to the operating parameter, in particular dependent on the geographical position, and the metadata, wherein the metadata provides a version information of the new map package needed for the updated navigation program. For example, the computing device is a navigation system of a vehicle that is operating in France. The geographical position may be determined by a positioning sensor, e.g. GPS. The navigation system then determines a new version of a map of France as required data to be updated together with the navigation system. Preferably, a history of locations of the computing device can also be used to determine the map packages required. This embodiment provides the advantage that the amount of data, especially the amount of map packages required, can be reduced.

Another aspect of the invention relates to a computing device configured to process a method according to any of the preceding embodiments. The computing device may comprise a processor and instructions to perform one embodiment of the method. In this aspect, same advantages and variations arise as with the method.

Another aspect of the invention relates to a vehicle with a computing device according to the previous aspect of the invention. The inventive vehicle is preferably designed as a motor vehicle, in particular as a passenger vehicle or a truck, or as a bus or a motor cycle.

The invention also comprises embodiments of the inventive computing device that comprise features that correspond to features as they have already been described in connection with the embodiments of the inventive method. For this reason, the corresponding features of the embodiments of the inventive computing device are not described here again.

The invention also comprises a control device for the motor vehicle. The control device may comprise a data processing device or a processor circuit adapted to perform an embodiment of the method according to the invention. For this purpose, the processor circuit may comprise at least one microprocessor and/or at least one microcontroller and/or at least one FPGA (field programmable gate array) and/or at least one DSP (digital signal processor). Furthermore, the processor circuit may comprise program code which comprises computer-readable instructions to perform the embodiment of the method according to the invention when executed by the processor device. The program code may be stored in a data memory of the processor device.

The invention also comprises the combinations of the features of the different embodiments.

In the following an exemplary implementation of the invention is described. The figures show:
- Fig. 1: a schematic illustration of an embodiment of the inventive motor vehicle with a computing device; and
- Fig. 2: a method diagram according to an exemplary embodiment.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

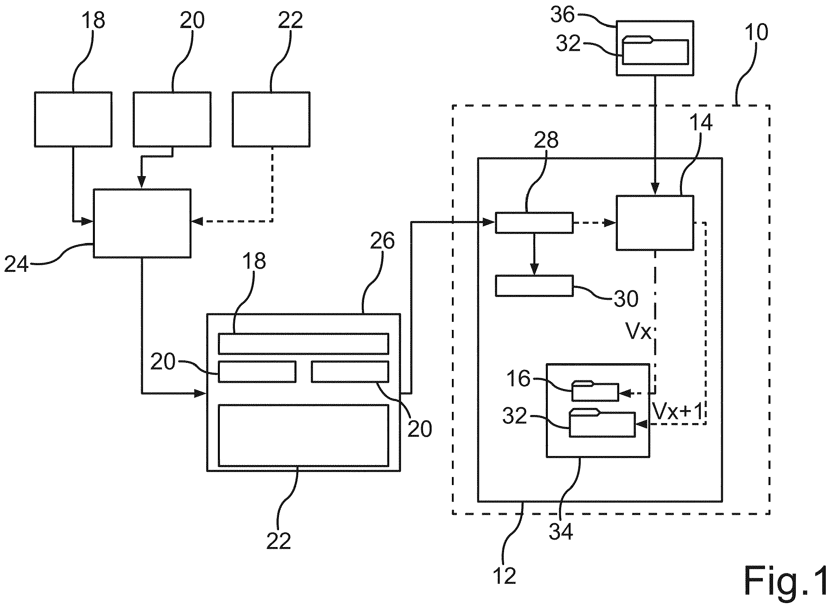

Fig. 1 shows a strongly schematized motor vehicle 10 with a computing device 12 according to an exemplary embodiment. The computing device 12 may be a head unit of the vehicle 10 executing several applications, for example a voice assistant 14 that is configured to provide a function to use voice input and voice output to control the vehicle 10.

By updating an operating environment of the computing device 12, also the application 14 and the current data 16 that are used by the application 14 have to be updated. For example, the application 14, respectively the voice assistant 14, use a language package as application data 16, wherein after updating the operation environment, several APIs may be changed so that a new language package is required for the voice assistant 14.

To update the computing device 12 an update package 26 is provided by an update-medium 24, wherein the update package 26 comprises an operating environment update 18, at least one application update 20, especially for the voice assistant 14, and metadata 22 providing version information for data of a voice assistant 14 to be updated. In particular, the metadata do not comprise the actual data for the application to be updated but provide a link between an application version and the corresponding version information of the data 32 required.

The update package 26 that may be received from the update-medium 24 by an updater 28 of the computing device 12 is then distributed by the updater 28 to the corresponding functions. For example, the application update 20 may be distributed to an application updater 30, and the metadata 22 are provided to the voice assistant 14 currently running on the computing device 12.

The voice assistant 14 uses the metadata to determine required data 32 for the updated version. In particular, the voice assistant 14 can execute an optimized update strategy for its data independently from the update of the operating environment and the update of the voice assistant 14 itself. For this purpose, also an operating parameter of the computing device 12 may be utilized to determine a subset of all available language packages, wherein the operating parameter may comprise a system language and/or a geographical position of the computing device 12. That is, the metadata 22 provides information to the application 14 about what data are needed for the updated version of the application and the operating parameter provide information about the data that are actually used by the updated application 14.

For example, the voice assistant 14 determines by the metadata 22 and the system language, that a new version of a German language package is required for the updated voice assistant 14. Then, the voice assistant 14 may retrieve the required data 32 from a remote application data storage 36, especially the new version of the German language package, using a separate update package and store the new version of the data 32 in a data memory 34 of the computing device 12.

In parallel or postponed, the updater 28 and/or the application updater 30 may start installing the operating environment update 18 and the application update 20 on the computing device 12. After the updates are installed properly, the voice assistant 14 can be switched from the old or current version of the data (i.e. the current language package) 16 to the new version of the data 32. By this, an amount of data required to be retrieved by the update can be limited to a subset (e.g. only German language package) of all available data (all available language packages) of the application to be updated, and an update time can be reduced.

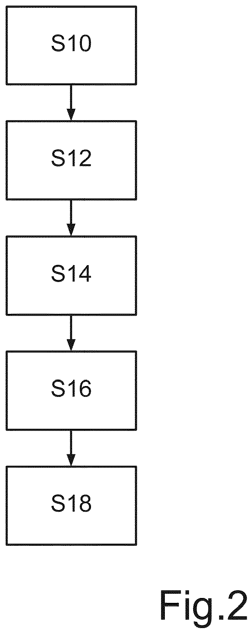

Fig. 2 shows a schematic method diagram for updating a computing device 12 according to an exemplary embodiment. In a step S10, an update package 26 is received from an update-medium 24, wherein the update package 26 comprising an operating environment update 18, at least one application update 20 and metadata 22, wherein the metadata 22 are providing version information that provide a link between a new application version and the corresponding version information of the data needed for the application to be updated.

In a step S12, the metadata 22 are provided to the application 14 to be updated by an updater 28 of the computing device 12. For example, the updater 28 forwards the metadata 22 to the respective application 14.

In a step S14, the at least one application 14 determines required data 32 for the updated application in dependence on the received metadata 22. Alternatively or additionally, the application 14 may further determine the required data 32 by an operating parameter of the computing device 12. For example, the application 14 may be a navigation program, wherein the operating parameter is a geographical position determined by a positioning sensor of a vehicle 10. With the geographical position of the computing device 12, the navigation program then determines map packages suitable for the geographical position as required data 32.

In a step S16, the required data 32 are retrieved in a separate update package by the at least one application 14, and a data memory 34 of the computing device 12 is amended by the required data 32.

In a step S18, the updater 28 updates the computing device 12 with the operating environment update 18 and the at least one application 14 with the application update 20. For this purpose, a memory of the computing device 12 preferably comprises two mirrored partitions, wherein a first partition is executing the operating environment and the current applications 14, while a second partition is updated by the update package 26. The at least one application 14 executed on the first partition may access a current version of the data 16 that is accessible from both partitions by being located in a separate data memory 34. After the new version of data 32 is stored on the data memory 34 and the update of the application 14 and operating environment is completed, the second partition can be switched to an operating state, wherein the updated application on the second partition is configured to access the new version of the required data 32 on the data memory 34. Thereby, a seamless operability of the applications can be ensured.

In another exemplary aspect, application developers/operators of the update system may provide metadata about required application data in preparation for combined operating environment update and application update. These are then integrated as part of the operating environment update process. At the start of the update process, this application specific information of the metadata is read out and distributed to the applications that are still active, i.e. those that have not yet been updated.

The respective applications can then implement application specific update strategies for their data based on this information and, if necessary, other operation parameters or environment variables, for example, a current vehicle position or a current system language, and independently download and cash them.

For example, an updater 28 for the operating environment (computing device 12) and the application 14 coordinates and executes the updates. In this regard, the metadata 22 are provided to the individual applications 14 and thus informs the applications of scheduled application version information. The applications 14 can now execute an optimized update strategy of their data and fill up their data store (data memory 34) with new data 32 matching application versions announced by the metadata.

This provides the advantage that updating of application data can be done in preparation, but decoupled from operating environment and application updates. Applications can perform optimizations when preparing to update data. Update strategies can be optimized independently. Then, the updated environment and application are activated, consistent application data are then also available and thus minimizing downtimes of functions.

Overall, the examples show how a mechanism to ensure a seamless operability of applications in update scenarios can be provided.

## Claims

1. Method for updating a computing device (12), comprising:
- receiving (S10) an update package (26) from an update-medium (24), wherein the update package (26) comprises an operating environment update (18), at least one application update (20) and metadata (22), wherein the metadata (22) are providing version information for data of the application to be updated, wherein the operation environment comprises firmware, framework software and/or operating systems;
- providing (S12) the metadata (22) to the at least one application (14) by an updater (28) of the computing device (12);
- determining (S14), by the at least one application (14), required data (32) for the application (14) to be updated depending on the metadata (22), wherein the metadata (22) provides a link between an application version and the corresponding version information of the data required;
- retrieving (S16) the required data (32) in a respective separate update package from a remote application data storage (36) by the at least one application (14) and amending a data memory (34) of the application (14) with the retrieved required data (32);
- updating (S18) the computing device (12) by the updater (28) with the operating environment update (18) and the at least one application (14) with the application update (20);
- wherein a memory of the computing device (12) comprises two partitions, wherein a first partition executing the operating environment and the application (14) during the update, while a second partition is updated by the update package (26), wherein after the update package (26) is installed, an operation state of the first and second partition is switched so that the second partition executes the updated operating environment and the updated application (8);
- wherein the data memory (34) of the application (14) is separated from the two partitions and wherein the data memory (34) is accessible from both partitions by the at least one application (14), wherein the application (14) of the first partition accesses a current version of the data (16), while the retrieved data (32) for the application to be updated is saved as a new version in the data memory (34), wherein by switching the operation state the application (14) of the second partition is configured to access the new version of the data (32).

2. Method according to claim 1, wherein the required data (32) are a subset of all available data of the application to be updated.

3. Method according to any of the preceding claims, wherein the required data (32) are retrieved and installed in parallel and/or independently from updating the computing device (12) with the operating environment update (18) and the at least one application (14) with the application update (20).

4. Method according to any of the preceding claims, wherein the required data (32) of the application (14) to be updated are further determined by an operating parameter of the computing device (12).

5. Method according to claim 4, wherein the operating parameter is a system language and/or a geographical position of the computing device (12).

6. Method according to claim 4 or 5, wherein the at least one application (14) is configured as a voice assistant and the required data (32) comprise a language package of the voice assistant selected according to the operating parameter and the metadata (22).

7. Method according to any of the claims 4 to 6, wherein the at least one application (14) is configured as a navigation program and the required data (32) comprise a map package of the navigation program selected according to the operating parameter and the metadata (22).

8. Computing device (12) configured to process a method according to any of the preceding claims.

9. Vehicle (10) with a computing device (12) according to claim 8.

## Patentansprüche

1. Verfahren zum Aktualisieren einer Rechenvorrichtung (12), das umfasst:
- Empfangen (S10) eines Aktualisierungspakets (26) von einem Aktualisierungsmedium (24), wobei das Aktualisierungspaket (26) eine Betriebsumgebungsaktualisierung (18), mindestens eine Anwendungsaktualisierung (20) und Metadaten (22) umfasst, wobei die Metadaten (22) Versionsinformationen für Daten der zu aktualisieren Anwendung bereitstellen, wobei die Betriebsumgebung Firmware, Rahmen-Software und/oder Betriebssysteme umfasst;
- Bereitstellen (S12) der Metadaten (22) für die mindestens eine Anwendung (14) durch ein Aktualisierungsprogramm (28) der Rechenvorrichtung (12);
- Bestimmen (S14) von erforderlichen Daten (32) für die zu aktualisierende Anwendung (14) in Abhängigkeit von den Metadaten (22) durch die mindestens eine Anwendung (14), wobei die Metadaten (22) eine Verknüpfung zwischen einer Anwendungsversion und den entsprechenden Versionsinformationen der erforderlichen Daten bereitstellen;
- Abrufen (S16) der erforderlichen Daten (32) in einem jeweiligen separaten Aktualisierungspaket von einem entfernten Anwendungsdatenspeicher (36) durch die mindestens eine Anwendung (14) und Abändern eines Datenspeichers (34) der Anwendung (14) mit den abgerufenen erforderlichen Daten (32);
- Aktualisieren (S18) der Rechenvorrichtung (12) durch das Aktualisierungsprogramm (28) mit der Betriebsumgebungsaktualisierung (18) und der mindestens einen Anwendung (14) mit der Anwendungsaktualisierung (20);
- wobei ein Speicher der Rechenvorrichtung (12) zwei Partitionen umfasst, wobei eine erste Partition die Betriebsumgebung und die Anwendung (14) während der Aktualisierung ausführt, während eine zweite Partition durch das Aktualisierungspaket (26) aktualisiert wird, wobei, nachdem das Aktualisierungspaket (26) installiert ist, ein Betriebszustand der ersten und der zweiten Partition gewechselt wird, so dass die zweite Partition die aktualisierte Betriebsumgebung und die aktualisierte Anwendung (8) ausführt;
- wobei der Datenspeicher (34) der Anwendung (14) von den zwei Partitionen getrennt ist und wobei der Datenspeicher (34) für beide Partitionen durch die mindestens eine Anwendung (14) zugänglich ist, wobei die Anwendung (14) der ersten Partition auf eine aktuelle Version der Daten (16) zugreift, während die abgerufenen Daten (32) für die zu aktualisierende Anwendung als neue Version im Datenspeicher (34) gespeichert werden, wobei durch Wechseln des Betriebszustandes die Anwendung (14) der zweiten Partition dazu eingerichtet ist, auf die neue Version der Daten (32) zuzugreifen.

2. Verfahren nach Anspruch 1, wobei die erforderlichen Daten (32) eine Teilmenge aller verfügbaren Daten der zu aktualisierenden Anwendung sind.

3. Verfahren nach einem der vorangehenden Ansprüche, wobei die erforderlichen Daten (32) parallel und/oder unabhängig von der Aktualisierung der Rechenvorrichtung (12) mit der Betriebsumgebungsaktualisierung (18) und der mindestens einen Anwendung (14) mit der Anwendungsaktualisierung (20) abgerufen und installiert werden.

4. Verfahren nach einem der vorangehenden Ansprüche, wobei die erforderlichen Daten (32) der zu aktualisierenden Anwendung (14) ferner durch einen Betriebsparameter der Rechenvorrichtung (12) bestimmt werden.

5. Verfahren nach Anspruch 4, wobei der Betriebsparameter eine Systemsprache und/oder eine geographische Position der Rechenvorrichtung (12) ist.

6. Verfahren nach Anspruch 4 oder 5, wobei die mindestens eine Anwendung (14) als Sprachassistent konfiguriert ist und die erforderlichen Daten (32) ein Sprachpaket des Sprachassistenten umfassen, das gemäß dem Betriebsparameter und den Metadaten (22) ausgewählt wird.

7. Verfahren nach einem der Ansprüche 4 bis 6, wobei die mindestens eine Anwendung (14) als Navigationsprogramm konfiguriert ist und die erforderlichen Daten (32) ein Kartenpaket des Navigationsprogramms umfassen, das gemäß dem Betriebsparameter und den Metadaten (22) ausgewählt wird.

8. Rechenvorrichtung (12), die dazu eingerichtet ist, ein Verfahren nach einem der vorangehenden Ansprüche zu verarbeiten.

9. Fahrzeug (10) mit einer Rechenvorrichtung (12) nach Anspruch 8.

## Revendications

1. Procédé de mise à jour d'un dispositif informatique (12), comportant :
- recevoir (S10) un progiciel de mise à jour (26) d'un support de mise à jour (24), le progiciel de mise à jour (26) comportant une mise à jour d'environnement d'exploitation (18), au moins une mise à jour d'application (20) et des métadonnées (22), les métadonnées (22) fournissant des informations de version pour des données de l'application à mettre à jour, l'environnement d'exploitation comportant un microprogramme, un logiciel d'infrastructure et/ou des systèmes d'exploitation ;
- fournir (S12) les métadonnées (22) à la au moins une application (14) par un actualisateur (28) du dispositif informatique (12) ;
- déterminer (S14), par la au moins une application (24), des données (32) requises pour l'application (14) à mettre à jour en fonction des métadonnées (22), les métadonnées (22) fournissant un lien entre une version d'application et les informations de version correspondantes des données requises ;
- récupérer (S16) les données requises (32) dans un progiciel de mise à jour séparé respectif d'un stockage de données d'application à distance (36) par la au moins une application (14) et modifier une mémoire de données (34) de l'application (14) avec les données requises (32) récupérées ;
- mettre à jour (S18) le dispositif informatique (12) par l'actualisateur (28) avec la mise à jour d'environnement d'exploitation (18) et la au moins une application (14) avec la mise à jour d'application (20) ;
- une mémoire du dispositif informatique (12) comportant deux partitions, une première partition exécutant l'environnement d'exploitation et l'application (14) pendant la mise à jour, alors qu'une seconde partition est mise à jour par le progiciel de mise à jour (26), après l'installation du progiciel de mise à jour (26), un état de fonctionnement des première et seconde partitions étant inversé de sorte que la seconde partition exécute l'environnement d'exploitation mis à jour et l'application mise à jour (8) ;
- la mémoire de données (34) de l'application (14) étant séparée des deux partitions et la mémoire de données (34) étant rendue accessible à partir des deux partitions par la au moins une application (14), l'application (14) de la première partition accédant à une version actuelle des données (16), alors que les données récupérées (32) pour l'application à mettre à jour sont enregistrées comme une nouvelle version dans la mémoire de données (34), l'application (14) de la seconde partition étant configuré pour accéder à la nouvelle version des données (32) en inversant l'état de fonctionnement.

2. Procédé selon la revendication 1, dans lequel les données requises (32) sont un sous-ensemble de toutes les données disponibles de l'application à mettre à jour.

3. Procédé selon l'une quelconque des revendications précédentes, dans lequel les données requises (32) sont récupérées et installées en parallèle et/ou indépendamment de la mise à jour du dispositif informatique (12) avec la mise à jour d'environnement d'exploitation (18) et de la au moins une application (14) avec la mise à jour d'application (20).

4. Procédé selon l'une quelconque des revendications précédentes, dans lequel les données requises (32) de l'application (14) à mettre à jour sont en outre déterminées par un paramètre d'exploitation du dispositif informatique (12).

5. Procédé selon la revendication 4, dans lequel le paramètre d'exploitation est une langue de système et/ou une position géographique du dispositif informatique (12).

6. Procédé selon la revendication 4 ou 5, dans lequel la au moins une application (14) est configurée comme un assistant vocal et les données requises (32) comportent un progiciel linguistique de l'assistant vocal choisi en fonction du paramètre d'exploitation et des métadonnées (22).

7. Procédé selon l'une quelconque des revendication 4 à 6, dans lequel la au moins une application (14) est configurée comme un programme de navigation et les données requises (32) comportent un progiciel de cartographie du programme de navigation choisi en fonction du paramètre d'exploitation et des métadonnées (22).

8. Dispositif informatique (12) configuré pour traiter un procédé selon l'une quelconque des revendications précédentes.

9. Véhicule (10) ayant un dispositif informatique (12) selon la revendication 8.
